(19) Europäisches Patentamt
European Patent Office
Office européen des brevets

(11) **EP 1 251 342 A2**

(12) **EUROPÄISCHE PATENTANMELDUNG**

(43) Veröffentlichungstag:
**23.10.2002 Patentblatt 2002/43**

(51) Int Cl.⁷: **G01M 19/00**

(21) Anmeldenummer: **02405230.0**

(22) Anmeldetag: **25.03.2002**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **14.04.2001 DE 10118541**

(71) Anmelder: **ALSTOM (Switzerland) Ltd
5401 Baden (CH)**

(72) Erfinder:
• **Bernhardi, Otto
  76669 Bad Schönborn (DE)**
• **Mücke, Roland
  5210 Windisch (CH)**
• **Schmultzler, Hans Joachim
  67487 Maikammer (DE)**
• **Sommer, Christoph, Prof.
  59872 Meschede (DE)**
• **Sommer, Marianne
  69610 Walldorf (DE)**

(54) **Verfahren zur Abschätzung der Lebensdauer von Wärmedämmschichten**

(57) Ein Verfahren zum Abschätzen der Lebensdauer einer Wärmedämmschicht (14), die mittels einer dazwischenliegenden Haftvermittlerschicht (12) auf der Oberfläche eines zyklischen thermischen Belastungen unterworfenen Bauteils, insbesondere einer Leit- und/ oder Laufschaufel einer Gasturbine, angebracht ist, führt dadurch bei vereinfachter Rechnung zu genaueren Ergebnissen, dass in einem ersten Schritt die Amplitude der Normalspannung ($\Delta\sigma_n$) senkrecht zur Grenzschicht zwischen Haftvermittlerschicht (12) und Wärmedämmschicht (14) bei zyklischer Belastung bestimmt wird, und dass in einem zweiten Schritt zu jeder Normalspannungsamplitude ($\Delta\sigma_n$) nach Massgabe der Formel

$$N_i = C\left(\frac{\Delta\sigma_n}{\sigma_0}\right)^m$$

die Anzahl $N_i$ der ertragbaren Zyklen berechnet wird, wobei $\sigma_0$ ein Bezugswert der Spannung ist und $C(\delta_{ox})$ und $m(\delta_{ox})$ Materialparameter sind, welche von der Dikke ($\delta_{ox}$) einer zwischen der Wärmedämmschicht (14) und der Haftvermittlerschicht (12) befindlichen und bei zyklischer Belastung dicker werdenden Oxidschicht (13) abhängen.

10 →

*Fig. 5*

EP 1 251 342 A2

**Beschreibung**

TECHNISCHES GEBIET

Die vorliegende Erfindung bezieht sich auf das Gebiet der Technik von thermisch hochbelasteten Bauteilen wie z.B. Komponenten (Kolben o.ä.) von Verbrennungsmaschinen, Gasturbinenschaufeln, Brennkammern etc.

STAND DER TECHNIK

Thermisch hochbelastete Komponenten aus dem Hochtemperaturbereich von Gasturbinen wie z.B. Laufschaufeln oder Leitschaufeln werden aus zwei Gründen beschichtet:

- um das Schaufelmaterial gegen korrosive Angriffe zu schützen, und
- um die Temperaturen des Metalls auf ein erträgliches Mass zu reduzieren.

Üblicherweise werden auf das Basismaterial zwei Beschichtungen aufgetragen. Die erste ist die sogenannte "Overlay"-Beschichtung, die gegen Korrosion schützt. Die zweite Beschichtung, die üblicherweise als Wärmedämmschicht (Thermal Barrier Coating TBC) bezeichnet wird, und die nur bei Bedarf aufgebracht wird, dient der o.g. thermischen Isolierung.

Derartige beschichtete Komponenten können jedoch auch aus verschiedenen Gründen fehlerhaft werden: Fehlanpassungen bezüglich der thermischen Ausdehnungskoeffizienten zwischen den verschiedenen Materialien, aus denen das Bauteil besteht, können thermische Spannungen und Deformationen im System hervorrufen. Weiterhin können Verzunderungen durch Oxidation und deren Wachstum bei höheren Temperaturen zusätzliche Spannungslasten erzeugen. Diese Spannungen und Deformationen können schliesslich zum Reissen und Abplatzen der Bedeckungsschichten führen.

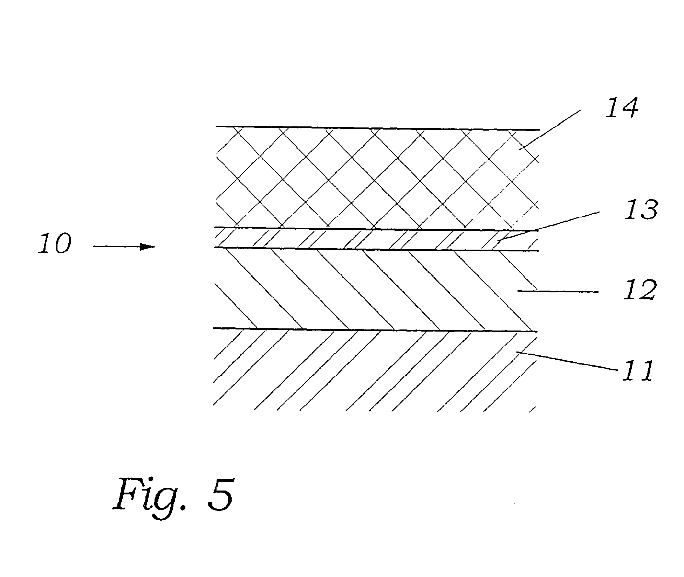

Gemäss Fig. 5 setzt sich das Beschichtungssystem 10 daher üblicherweise aus vier verschiedenen Schichten zusammen:

- dem Basismaterial 11, das üblicherweise einige mm dick ist,
- der Haftvermittlerschicht 12, die ein Dicke von etwa 0,1....0,3 mm aufweist,
- einer thermisch gewachsenen Oxidschicht (Thermal Grown Oxide TGO) 13, die bis zu einer Dicke von 0,02 mm wächst, und
- der Wärmedämmschicht 14, die ungefähr 0,2...0,4 mm dick ist.

Es sind bereits eingehende Untersuchungen des Spannungs/Deformationsverhaltens auf der Basis von Finite-Elemente-Netzen durchgeführt worden, bei denen alle vier Bestandteile des Beschichtungssystems in allen Einzelheiten, einschliesslich eines nichtlinearen Materialverhalten, modelliert worden sind. Es hat sich dabei herausgestellt, dass sowohl das thermische Wachstum der Oxidschichten als auch das Kriechverhalten der Haftvermittlerschichten eine wesentliche Rolle bei der Fehlerbildung spielen (siehe dazu z.B. den Artikel von Freborg, A.M., Ferguson, B. L.: 'Modelling oxidation induced stresses in thermal barrier coatings'. Material Science and Engineering A245, 1998, S. 182-190). Die Resultate dieser Untersuchungen sind jedoch nicht zur Vorhersage von Lebensdauern einsetzbar.

DARSTELLUNG DER ERFINDUNG

Es ist daher Aufgabe der Erfindung, ein vereinfachtes Verfahren zum Abschätzen der Lebensdauer einer Wärmedämmschicht anzugeben, welches die Rolle der sich ändernden Oxidschicht mitberücksichtigt.

Die Aufgabe wird durch die Gesamtheit der Merkmale des Anspruchs 1 gelöst. Der Kern der Erfindung besteht darin, bei der Berechnung der die Anzahl $N_i$ der ertragbaren Zyklen Materialparameter $C(\delta_{ox})$ und $m(\delta_{ox})$ zu verwenden, welche von der Dicke ($\delta_{ox}$) einer zwischen der Wärmedämmschicht 14 und der Haftvermittlerschicht 12 befindlichen und bei zyklischer Belastung dicker werdenden Oxidschicht 13 abhängen.

Besonders einfach gestaltet sich die Berechnung dabei, wenn gemäss einer bevorzugten Ausgestaltung des Verfahrens nach der Erfindung die Abhängigkeit der Materialparameter $C(\delta_{ox})$ und $m(\delta_{ox})$ von der Dicke ($\delta_{ox}$) der Oxidschicht als linear angenommen wird, wenn weiterhin für die Zunahme der Dicke ($\delta_{ox}$) der Oxidschicht mit der Zeit t ein Wachstumsgesetz der Form

$$\delta_{ox} = k_p t^n$$

mit einer Wachstumskonstante $k_p$ und einem Exponenten n verwendet wird, wenn ein Schädigungsinkrement $\Delta D$ berechnet wird, welches der Näherungsformel

$$\Delta D(N) \approx \frac{1}{C(N)}(\Delta\sigma_n)^{-m(N)}$$

genügt, wobei N die Anzahl der Belastungszyklen angibt, und C(N) und m(N) Parameter sind, welche den Gleichungen

$$C(N) = \alpha_c\,(NT)^n + \beta_c$$

und

$$m(N) = \alpha_m(NT)^n + \beta_m$$

genügen, mit dem Exponenten n, den Konstanten $\alpha_c$, $\alpha_m$, $\beta_c$, $\beta_m$, und der Haltezeit T bei hoher Temperatur pro Belastungszyklus, und wenn die Zahl der vom Bauteil ertragbaren Belastungszyklen $N_i$ dadurch bestimmt wird, dass die Schädigungsinkremente nach der Formel

$$D = \sum_{N=1}^{N_i} \dot{\Delta}D(N)$$

aufsummiert werden, bis D den Wert 1 erreicht hat.

Weitere Ausführungsformen ergeben sich aus den abhängigen Ansprüchen.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1   die für die Bestimmung der Lebensdauer angenommene vereinfachte, lineare Abhängigkeit der Fehlerkonstante C von der Dicke $\delta_{ox}$ der Oxidschicht;

Fig. 2   die Spannungskomponenten (Normalspannung und Tangentialspannung bei einem zylindrischen Probestück;

Fig. 3   experimentelle Ergebnisse für die Lebensdauer bzw. die Dicke der Oxidschicht in Abhängigkeit von der Voroxidationsdauer;

Fig. 4   die gemessene (Kurve a) und die berechnete (Kurve b) Abhängigkeit der Anzahl der Zyklen bis zum Versagen ("cycles-to-failure") von der Normalspannung für ein Probestück mit 0,6 mm-Coatec-Wärmedämmschicht; und

Fig. 5   den schematischen Aufbau eines Beschichtungssystems mit Wärmedämmschicht.

WEGE ZUR AUSFÜHRUNG DER ERFINDUNG

Im Rahmen der Erfindung wird das Fehlerverhalten aufgrund einer thermozyklischer Ermüdung des Beschichtungssystems betrachtet. Dieser Ansatz ist in gewisser Weise durch die bei Experimenten an Schaufeln im Fliessbett erhaltenen Ergebnisse gerechtfertigt, aus denen hervorgeht, dass ein Fehler in der Beschichtung an der Anströmkante des Schaufelblattes beginnt und sich dann mit wachsender Anzahl von Belastungszyklen über die Unterdruckseite des Prüflings ausbreitet.

Mögliche Grundgrössen, die für das zyklische Versagen der TBC-Schicht bedeutsam sein können, sind:

-   der Bereich der mechanischen Deformation in der Schichtebene,

- der Bereich der Spannung, die senkrecht zur Grenzschicht zwischen TBC-Schicht und Haftvermittlerschicht anliegt (Normalspannung),
- die Bereiche der gespeicherten mechanischen Energie.

Es wird angenommen, dass die für das Versagen der TBC-Schicht bedeutsame Grösse der Bereich der mechanischen Spannung ist, die senkrecht zur Grenzschicht zwischen TBC-Schicht und Haftvermittlerschicht anliegt (Normalspannung $\sigma_n$). Es wird weiterhin vorausgesetzt, dass, wenn das Beschichtungssystem mit Normalspannungszyklen mit konstanter Spannungsamplitude ($\Delta\sigma$) belastet wird und die Oxidschicht nicht wächst, das zyklische Fehlerverhalten der TBC-Schicht näherungsweise durch eine Standard-Fehlergleichung vom Manson-Coffin-Typ beschrieben werden kann

$$(1) \qquad N_i = C\left(\frac{\Delta\sigma}{\sigma_0}\right)^m$$

wobei

- $N_i$ die Anzahl der Zyklen bis zum Versagen ist (also z.B. bis zum Abblättern der TBC-Schicht an einem kritischen Punkt der Schaufeloberfläche),
- C und m Materialkonstanten sind, welche das Fehlerverhalten des Materials beschreiben,
- $\Delta\sigma$ der Bereich der Normalspannung ist, und
- $\sigma_0$ ein Bezugswert der Spannung ist.

Es sei angemerkt, dass der Spannungsbezugswert $\sigma_0$ eingeführt wird, um den Ausdruck in den Klammern von Gleichung (1) dimensionslos zu machen. Der Wert von $\sigma_0$ wird beispielsweise auf $1\frac{N}{mm^2} = 10^{-6}$ *Mpa* festgesetzt.

Die o.g. Annahme entspricht der Annahme, dass die Anzahl der Zyklen bis zum Versagen als Gerade in einem $\log(\Delta\sigma)$ über $\log(N_i)$ Diagramm aufgetragen werden kann, und dass sie von der oberen Temperatur der thermischen Zyklen abhängt. Bei der tatsächlichen Implementierung der Berechnungsmethode wird diese Temperaturabhängigkeit durch eine geeignete, stückweise lineare Interpolation berücksichtigt.

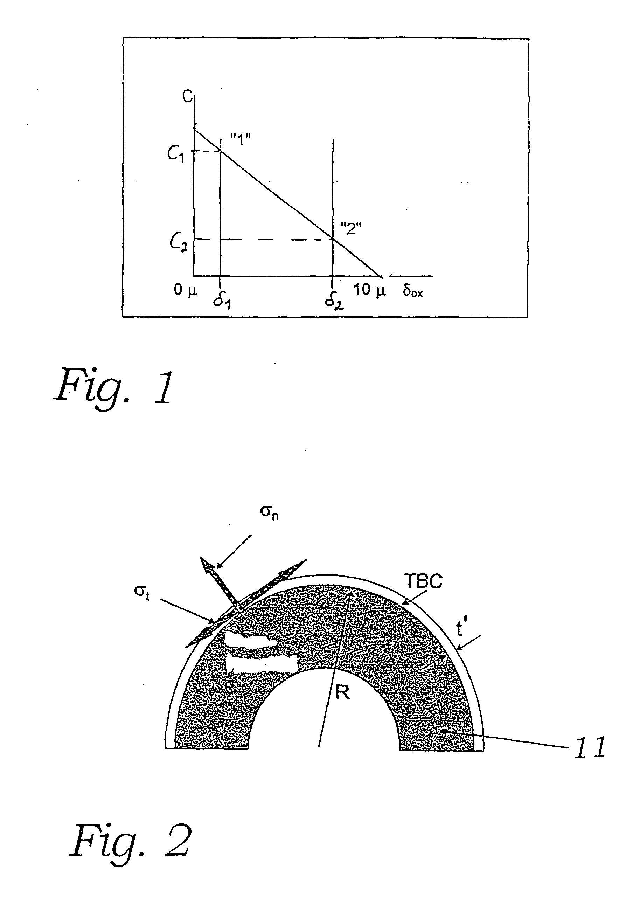

Es gibt weiterhin experimentelle Beweise dafür, dass die zyklische Fehlerfestigkeit der TBC-Schicht von der Dicke der Oxidschicht $\delta_{ox}$ abhängt: Zu Anfang, wenn sich noch keine Oxidschicht gebildet hat, liegt die höchste Fehlerfestigkeit vor. Nachdem jedoch die Oxidschicht bis zu einer kritischen Dicke (von typischerweise 10...14 µm) gewachsen ist, blättert die TBC-Schicht ab, selbst wenn keine wesentliche zyklische Belastung vorhanden ist. Um dieses Fehlerverhalten nachzubilden, wird angenommen, dass die Lebensdauerparameter C und m - zusätzlich zur Abhängigkeit von der Temperatur - linear mit wachsender Dicke $\delta_{ox}$ der Oxidschicht abnehmen, wie dies in Fig. 1 beispielhaft für den Parameter C dargestellt ist. Eine weitere Annahme wird für das Wachsen der Dicke $\delta_{ox}$ der Oxidschicht mit der Zeit benötigt. Hierfür wird das folgende, wohlbekannte Wachstumsgesetz verwendet:

$$(2) \qquad \delta_{ox} = k_p t^n.$$

Das Wachstum der Oxidschicht wird demnach durch eine Wachstumskonstante $k_p$ und einen Exponenten n beschrieben. Der Exponent n hat typischerweise einen Wert von 0,5; d.h., das zeitliche Wachstum der Oxidschicht wird als proportional zur Wurzel aus der Zeit angenommen. Der Wert n kann jedoch prinzipiell auch andere Werte annehmen. Weiterhin ist von der Wachstumskonstante $k_p$ bekannt, dass sie mit der Temperatur zunimmt. Sie wird daher als temperaturabhängige Grösse eingeführt.

Das Fehlerverhalten der TBC-Schicht wird dadurch nachgebildet, dass den Fehlerkonstanten C und m eine Abhängigkeit von der Oxidschichtdicke gemäss Fig. 1 zugeordnet wird. Die Fehlerkonstante C beispielsweise fällt mit zunehmender Oxidschichtdicke $\delta_{ox}$ linear auf Null ab. Das lineare Verhalten kann durch Vorgabe zweier Punkte "1" und "2" vollständig festgelegt werden (Fig. 1), denen die entsprechenden Fehlerkonstanten $C_1$ und $C_2$ sowie $\delta_1$ und $\delta_2$ zugeordnet sind. Die Fehlerkonstante C wird auf diese Weise eine Funktion der Oxidschichtdicke gemäss:

$$(3) \qquad C(\delta_{ox}) = C_1 + \frac{C_2 - C_1}{\delta_2 - \delta_1}(\delta_{ox} - \delta_1)$$

Eine entsprechend Beziehung ergibt sich für den Fehlerexponenten m:

$$(4) \qquad m(\delta_{ox}) = m_1 + \frac{m_2 - m_1}{\delta_2 - \delta_1}(\delta_{ox} - \delta_1)$$

Führt man nun das Wachstumsgesetz aus Gleichung (2) ein, erhält man für Gleichung (3):

$$(5) \qquad C(t) = C_1 + \frac{C_2 - C_1}{\delta_2 - \delta_1}(k_p t^n - \delta_1).$$

Eine entsprechende Beziehung, die hier der Einfachheit halber nicht ausgeschrieben ist, ergibt sich für den Fehlerexponenten m. Die Gleichung (5) lässt sich schreiben als

$$(6) \qquad C(t) = \alpha_c t'' + \beta_c$$

mit den folgenden Abkürzungen:

$$(7) \qquad \alpha_c = \frac{C_2 - C_1}{\delta_2 - \delta_1} k_p$$

und

$$(8) \qquad \beta_c = C_1 + \frac{C_2 - C_1}{\delta_2 - \delta_1} \delta_1$$

Die Zeit t wird näherungsweise durch das Produkt aus der jeweiligen Anzahl N der Belastungszyklen und der Haltezeit T (bei hoher Temperatur) dargestellt, wobei die Haltezeit lang im Vergleich zu den Übergangszeiten während der Zyklen angenommen wird:

$$(9) \qquad t = NT$$

Daraus folgt dann für (6):

$$(10) \qquad C(N) = \alpha_c(NT^n) + \beta_c$$

und entsprechend für den Exponenten m:

$$(11) \qquad m(N) = \alpha_m(NT)^n + \beta_m$$

Der Fehlergleichung bzw. Schädigungsgleichung (1) entspricht dann die folgende Gleichung für die Schädigungsrate dD als Funktion der Rate dN der Belastungszyklen:

$$(12) \qquad dD = \frac{1}{C(N)}(\Delta\sigma_n)^{-m(N)} dN = \frac{1}{\alpha_c(NT)^n + \beta_c}(\Delta\sigma_n)^{-(m_1 + \alpha_m(NT)^n + \beta_m)} dN.$$

Ein Fehler tritt dann auf, wenn die folgenden Bedingungen gelten:

$$(13) \qquad D = 1 \text{ and } N = N_i$$

Da die Gleichung (12) nicht analytisch integriert werden kann, wird eine einfache Summation angewendet.

Dazu wird folgende Näherung gemacht:

$$(14) \qquad \Delta D \approx dD = \frac{1}{C(N)}(\Delta \sigma_n)^{-m(N)}$$

und summiert:

$$(15) \qquad\qquad D = \sum_{N=1}^{N_i} \Delta D \ .$$

Da $N_i$ nicht bekannt ist, wird die Summation solange durchgeführt, bis eine der beiden Bedingungen erfüllt ist:

$$(16) \qquad D \geq 1 \ or \ \Delta D \leq 0.$$

Wie bereits erwähnt, ist diejenige mechanische Grösse, die für die Lebensdauer der TBC-Schicht relevant ist, die Spannung senkrecht zur Grenzschicht zwischen der TBC-Schicht und der angrenzenden Haftvermittlerschicht. Diese Normalspannung kann jedoch nicht aus den derzeit benutzten Finite-Elemente-Modellen entnommen werden, weil normalerweise das Basismaterial durch finite Volumenelemente modelliert wird. Das relativ schwache mechanische Verhalten der dünnen Abdeckschichten wird dabei vernachlässigt.

Die Dicke der TBC-Schicht ist im Vergleich zur Dicke der benachbarten Metallwand klein. Weiterhin ist die elastische Steifigkeit der TBC-Schicht typischerweise sehr viel (üblicherweise um eine Grössenordnung) kleiner als die Steifigkeit des Metalls. Dies ermöglicht die Annahme, dass die gesamte Spannung, die in der TBC-Schicht tangential zur Oberfläche des Bauteils wirkt, durch die gesamte tangentiale Spannung des Basismaterials bestimmt wird.

Weiterhin kann die senkrecht zur Grenzfläche zwischen TBC-Schicht und Haftvermittlerschicht wirkende Spannung (Normalspannung) $\sigma_n$ dann abgeschätzt werden, wenn die Grösse der Oberflächenkrümmung bekannt ist. Im Falle eines zylindrischen Bauteils entspricht diese Abschätzung der bekannten "Zylinderformel"

$$(17) \qquad \sigma_n = \frac{t'}{R}\sigma_t$$

wobei $\sigma_n$ die Normalspannung und $\sigma_t$ die tangentiale Spannung in der TBC-Schicht darstellen, und t' and R die Dicke der TBC-Schicht und den Krümmungsradius bezeichnen (siehe Fig. 2).

Das tatsächlich eingesetzte Verfahren zur Bestimmung der Normalspannung ist aus folgenden Gründen ein bisschen komplizierter:

- In den meisten Fällen ist eine zweidimensionale tangentiale Spannung vorhanden.
- Die in Frage kommenden Bauteile haben im allgemeinen doppelt (konvex, konkav) gekrümmte Oberflächen.
- Die Bestimmung der Krümmungsparameter sollte auf Volumenelemente-Netze mit unterschiedlichen Typen von Volumenelementen anwendbar sein, unter anderem lineare Elemente, deren Oberfläche überhaupt keine eigenständige Krümmung aufweisen.

Für die Abschätzung der Normalspannung wird daher ein Verfahren angewandt, das auf Formulierungen der Standard-Schalen-Theorie zurückgreift, die hier nicht näher erläutert werden sollen.

Die bisher zum Deformationsverhalten der TBC-Schichten gesammelten Erfahrungen legen die Vermutung nahe, dass sich die Spannungen in der TBC-Schicht bei hohen Temperaturen abbauen und daher während der Haltezeiten bei hohen Temperaturen (d.h., wenn das Bauteil bei voller Last betrieben wird) verschwinden. Nach dem Abkühlen auf Zimmertemperatur entwickeln sich senkrechte Zugspannungen an der Grenzschicht zwischen TBC-Schicht und Haftvermittlerschicht, weil bei den betroffenen Bauelementen (Komponenten) die thermischen Ausdehnungskoeffizienten für die TBC-Schicht kleiner sind als für das Basismaterial.

Es kann daher angenommen werden, dass das Beschichtungssystem bei Zimmertemperatur mit senkrechter Zugspannung beaufschlagt wird. Die Beschichtung erfährt bei hohen Temperaturen keine mechanische Belastung, jedoch sind die Materialien korrosiven Angriffen und damit zusammenhängenden Degradationsprozessen ausgesetzt. Eine nicht-lineare Finite-Elemente-Analyse für Mehrfachzyklen, die Kriecheffekte mitberücksichtigt, kann hier die richtigen Zykluseigenschaften vorhersagen.

Wenn jedoch eine lineare Finite-Elemente-Analyse als Grundlage für die Abschätzung der Lebensdauer der TBC-Schicht eingesetzt wird, wird ein Belastungszyklus mit umgekehrter Charakteristik berechnet: Keine Spannungen (einschliesslich der senkrechten Spannungen) bei Zimmertemperatur und maximale senkrechte (Druck-)Spannungen bei Betriebstemperatur

Um diese Unterschiede zu überwinden und das Bestimmungsverfahren einfach zu halten, werden die Absolutwerte der Bereiche der Normalspannung für die Bestimmung herangezogen. Diese Näherung vernachlässigt jedoch mögliche Lebensdauerunterschiede für TBC-Schichten mit konvexer und konkaver Krümmung, weil der entsprechende Unterschied in den Vorzeichen der senkrechten Spannungen ignoriert wird.

Der Beschädigungskoeffizient C und der Exponent m werden festgelegt durch Vorgabe der Werte von $C_1(T_i)$ und $C_2(T_i)$ für einen geeigneten Satz von verschiedenen Temperaturen $T_i$. Weiterhin müssen die entsprechenden Dickenwerte $\delta_1(T_i)$ und $\delta_2(T_i)$ definiert werden.

$C_1(T_i)$ wird somit üblicherweise der temperaturabhängige Fehlerkoeffizient für das "jungfräuliche" TBC-System sein, das noch nicht oxidiert ist. Entsprechend ist $\delta_2(T_i)$ üblicherweise die Oxidschichtdicke, welche die TBC-Schicht sofort fehlerhaft werden lässt, ohne dass sie mit irgendeiner nennenswerten Ermüdungsbelastung beaufschlagt wird.

Um die Parameter der Oxidationsrate definieren zu können, sind Werte für den Exponenten $m(T_i)$ und den Koeffizienten $k_p(T_i)$ der Oxidationsrate erforderlich. Schliesslich wird noch die Haltezeit der betrachteten Belastungszyklen benötigt.

Zur Bestimmung der o.g. Parameter des benutzten Modells sind bisher nur relativ wenige experimentelle Daten vorhanden. Es sind jedoch bereits eine Reihe von Thermoschock-Experimenten in einem Fliessbett-Aufbau durchgeführt worden, wobei ein Satz von voroxidierten Schaufelabschnitten benutz wurde, um das Abplatzverhalten der TBC-Schichten zu untersuchen.

Nach der Voroxidation bei drei unterschiedlichen Temperaturen wurden die Probestücke in der Fliessbettanlage einer thermischen Wechselbelastung ausgesetzt. Die Haltezeit bei der oberen Temperatur betrug 5 Minuten. Die gesamte Belastungszeit während der Wechselbelastung im Fliessbett war daher klein im Vergleich zur Dauer der Voroxidation. Die Versuchsergebnisse können daher zur groben Abschätzung der benötigten Fehlerparameter herangezogen werden unter der Annahme, dass während der Wechselbelastung keine Änderung der Fehlerparameter C und m erfolgt. Es muss jedoch angemerkt werden, dass beim Betrieb einer realen Maschine (Gasturbine etc.) die Haltezeiten in Stunden oder sogar in Tagen zu messen sind, und dass dort üblicherweise keine Voroxidation stattfindet. Es werden sich daher, z.B. im Fall einer im Einsatz befindlichen Gasturbinenschaufel, die Fehlerparameter aller Wahrscheinlichkeit nach während der Lebensdauer der Komponente erheblich ändern.

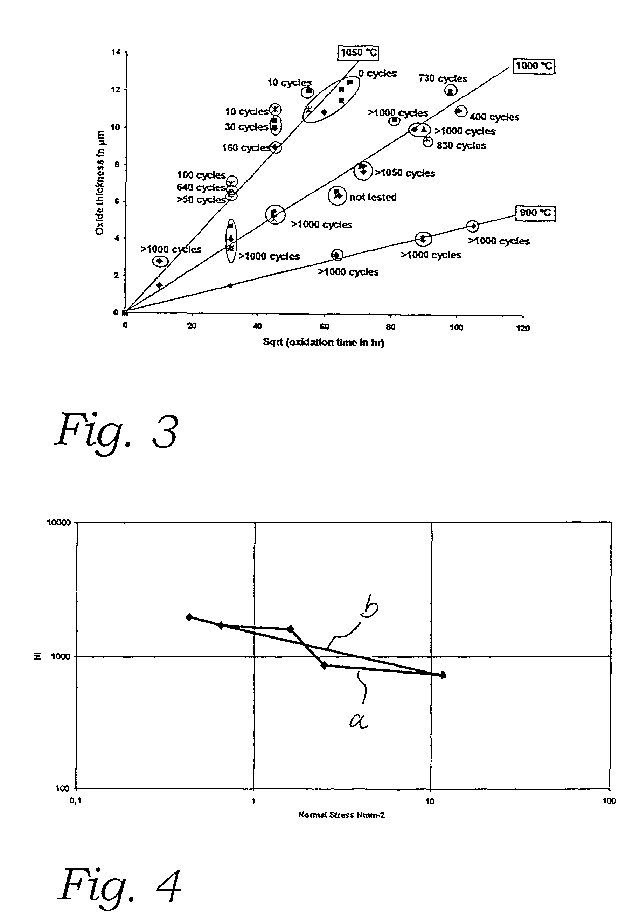

Einige wesentliche Ergebnisse dieser experimentellen Untersuchungen sind in Fig. 3 wiedergegeben, wo die Dicke der Oxidschicht über der Wurzel aus der Voroxidationsdauer aufgetragen ist. Zusätzlich sind in der Figur die gemessenen Anzahlen der Lastwechsel bis zum Fehler ("cycles-to-failure") der TBC-Schicht eingetragen. Für einen grossen Teil der Experimente wurde die Wechselbelastung nach 1000 Wechseln abgebrochen, so dass nur wenige Datenpunkte für die Abschätzung der Fehlerparameter brauchbar sind.

Das Abplatzen der TBC-Schichten beginnt üblicherweise an der Anströmkante der Probestücke, wo die Normalspannung am höchsten ist. Entsprechend sind in Fig. 3 die Zahlen der Lastwechsel eingetragen, die zu einem ersten Fehler in der TBC-Schicht (an der Anströmkante) geführt haben. Für alle Probestücke ausser einem wurden jedoch keine weiteren Lastwechsel durchgeführt, um das Fortschreiten der Schichtablösung in den weniger stark gekrümmten Bereichen der Probestücke zu messen.

Aus der Fig. 3 und der Untersuchung der Probestücke können die folgenden Ergebnisse zusammengefasst werden:

- Die Oxidschichtdicke kann in der Auftragung der Fig. 3 durch Geraden angenähert werden, deren Steigungen mit der Temperatur zunehmen. Dies legt nahe, dass die Dicke der Oxidschicht ungefähr proportional zur Wurzel aus der Oxidationsdauer ist. Es wird daher für Gleichung (2) der Exponent n=0,5 verwendet. Weiterhin können die temperaturabhängigen Werte für den Koeffizienten $k_p$ aus dem Diagramm abgelesen werden.

- Die zyklischen Eigenschaften der Fehler in der TBC-Schicht werden durch Fig. 3 bestätigt; die Abhängigkeit der Zahlen der Lastwechsel von der Dicke der Oxidschicht ist offensichtlich.

- Die Zahl der Lastwechsel bis zum Fehler an der Vorderkante (Anströmkante) der Schaufel geht gegen Null, wenn die Dicke der Oxidschicht einen Grenzwert von 12...14 μm erreicht. Es wurde darüber hinaus beobachtet, dass sich der fehlerhafte Bereich vergrössert und sich auch von der Vorderkante aus in weniger stark gekrümmte Gebiete ausbreitet, wenn sich Dicke der Oxidschicht diesem Grenzwert nähert. Dies zeigt, dass mit zunehmender Oxidschichtdicke die Fehlereigenschaften mehr und mehr unabhängig von der Normalspannung werden, sobald sich die Oxidschichtdicke dem Grenzwert 12...14 μm nähert.

- Probestücke, die ausreichend lange voroxidiert wurden, so dass ihre Oxidschichtdicke den Grenzwert 12...14 μm erreichte, neigen dazu, ohne weitere Lastwechsel ein Abplatzen über das gesamte Probestück zu zeigen; die TBC-Schicht fällt einfach vom Probestück ab, sobald es aus dem Voroxidationsofen genommen und auf Zimmertemperatur abgekühlt wird.

Der Fehlerexponent charakterisiert die Abhängigkeit der Anzahl der Zyklen bis zum Versagen von der Normalspannung: Ein Exponent von m = 0 bedeutet keine Abhängigkeit des Versagens von der Normalspannung. Bei den o.g. Experimenten ist dies offenbar der Fall für stark voroxidierte Probestücke, bei denen die TBC-Schicht unabhängig von der Krümmung von nahezu allen Oberflächenbereichen abplatzt. Es ist daher zu erwarten, dass der Exponent gegen Null geht, wenn sich die Dicke der Oxidschicht ihrem "Grenzwert" nähert.

Um den Wert des Fehlerexponenten m zu bestimmen, wurde einer der Schaufelabschnitte nach dem Auftreten des ersten Fehlers an der Schaufelspitze einer fortlaufenden zyklischen Belastung unterworfen, während das Fortschreiten des abgeblätterten Gebietes zu weniger stark gekrümmten Bereichen hin aufgezeichnet wurde. Für dieses Experiment wurde eine "coatec"-Beschichtung mit einer Dicke von 0,6 mm verwendet. Die Dauer der Voroxidation betrug 10000 h bei 1000°C. Analog zu den anderen Experimenten wurde eine Haltezeit von 5 Minuten bei der oberen Zyklustemperatur während der Wechselbelastung in der Fliessbettanlage benutzt. Daher ist die Gesamtdauer bei der oberen Temperatur klein im Vergleich zur Voroxidationsdauer, solange die Zahl der Zyklen kleiner als etwa 1000 ist. Es kann daher angenommen werden, dass die Dicke der Oxidschicht über den gesamten Verlauf der Wechselbelastung konstant ist.

Erwartungsgemäss breitete sich der Fehler in die Unterdruckseite hinein aus. Auf der Überdruckseite wurde kein Fehler beobachtet. Die so erhaltenen Ergebnisse sind in der nachfolgenden Tabelle 1 aufgelistet:

Tabelle 1

| Fortschreiten des Fehlerbereiches [mm] | Krümmung im Fehlerbereich [mm] | Normalspannung [Nmm$^{-2}$] | Zahl der Zyklen bis zum Versagen |
|---|---|---|---|
| 0,0 | 6,2 | 11,6 | 730 |
| 50,2 | 28,9 | 2,49 | 860 |
| 51,8 | 45,1 | 1,6 | 1600 |
| 62,8 | 112,0 | 0,643 | 1700 |
| 66,0 | 171,0 | 0,42 | 1970 |

Die tangentiale Spannung (thermische Fehlanpassung) $\sigma_t$ wurde unter folgenden Annahmen abgeschätzt:

- Thermischer Ausdehnungskoeffizient des Basismaterials: $\alpha_{base} = 16 \cdot 10^{-6}$

- Thermischer Ausdehnungskoeffizient der TBC-Schicht: $\alpha_{TBC} = 10 \cdot 10^{-6}$

- Elastizitätsmodul der TBC-Schicht: $E_{TBC} = 20000 Nmm^{-2}$

- Dicke der TBC-Schicht: $0.6 mm$

Weiterhin wurde die folgende Beziehung benutzt:

$$(18) \qquad \sigma_1 = E_{TBC} (\alpha_{base} - \alpha_{TBC})\Delta T.$$

Die Werte für die Normalspannung $\sigma_n$ wurden mittels der Gleichung (17) berechnet.

Die resultierenden Zahlen der Zyklen bis zum Versagen wurden über der Normalspannung aufgetragen, wie dies in Fig. 4 dargestellt ist (Kurve a). Eine Näherung mit den Fehlerparametern m = -0,3 und C = 1500 ist in Fig. 4 ebenfalls eingezeichnet (Kurve b). Diese Parameter sind für 1000°C obere Zyklustemperatur und für eine Wechselbelastung bei einer Oxidschicht mit einer konstanten Dicke nahe am "Grenzwert" 12...14 $\mu$m gültig. Für den Fall dünnerer Oxidschichten (d.h., bei kürzerer Voroxidationsdauer) wird der Parameter m wahrscheinlich höhere Werte, vielleicht in der Grössenordnung von -2...-5 annehmen, ähnlich wie die m-Fehlerparameter des Basismaterials.

Für die Bestimmung des Fehlerkoeffizienten C werden dieselben Annahmen gemacht wie oben, d.h., die Dicke der Oxidschicht wird als konstant während der Wechselbelastung in der Fliessbettanlage angenommen.

Für eine erste grobe Abschätzung wird vorausgesetzt, dass derselbe Fehlerexponent m = -0,3 gültig ist. Die Fehlerkoeffizienten C können dann einfach gemäss der Gleichung

$$(19) \qquad C = \left(\frac{\Delta\sigma}{\sigma_0}\right)^{-m} N_t$$

berechnet werden, mit

- Der Normalspanung $\Delta\sigma_n$ an der Anströhm- bzw. Vorderkante (höchster Wert) = 11,6$Nmm^{-2}$ und

- $\sigma_0$ = 1,0$Nmm^{-2}$.

Die so erhaltenen Werte für C sind in der nachfolgenden Tabelle 2 aufgelistet.

Tabelle 2

| Temperatur [°C] | Dicke der TBC-Schicht [mm] | Normal-spannung [$Nmm^{-2}$] | Dicke Oxid-schicht [μm] | Zyklen | C |
|---|---|---|---|---|---|
| 1050 | 0,3 | 5,6 | 6,5 | 640 | 380 |
| 1050 | 0,3 | 5,6 | 9 | 160 | 95 |
| 1000 | 0,3 | 5,6 | 10,8 | 400 | 240 |
| 1000 | 0,3 | 11,1 | 12 | 730 | 350 |

Die zwei Zeilen in Tabelle 2 für T = 1050°C ermöglichen eine Abschätzung von C als Funktion der Oxidschichtdicke, also beispielsweise die Definition von Werten $C(\delta_{ox})$. Unglücklicherweise ist dies nicht möglich für die Temperatur 900°C, weil dort keine $N_i$-Daten vorliegen. Weiterhin muss der beobachtete ansteigende C-Wert für die Temperatur von 1000°C einer Streuung in den gemessenen Lebensdauerdaten zugeschrieben werden.

Für das beschriebene Berechnungsverfahren ist ein Rechenprogramm mit der Bezeichnung COAT erstellt worden, das aus einem Source Code in der Sprache C besteht und als Eingangsdaten unter anderem Werte benutzt, die mittels des bekannten Finite-Elemente-Programms ABAQUS vorgängig berechnet worden sind.

Neben verschiedenen Unterprogrammen innerhalb der COAT-Software gibt es FORTRAN-Routinen die als Schnittstelle zum .fil-File von ABAQUS dienen. Ein Zugriff auf die HKS-ABAQUS-Libraries ist nicht nötig. Das Programm COAT kann daher unabhängig von ABAQUS laufen. Es wird dabei angenommen, dass die gesamten Daten der mechanischen Deformation, der thermischen Ausdehnung und der Temperatur in dem .fil-Ergebnis-File von ABAQUS abgelegt sind. Entsprechende Vorgaben dazu müssen innerhalb der EL FILE Definitionen der ABAQUS-Eingaben gemacht werden. Die resultierenden Daten für die Elemente müssen unter Verwendung des Keywords *EL FILE, POSITION=AVERAGED AT NODES gespeichert werden.

BEZUGSZEICHENLISTE

| | |
|---|---|
| 10 | Beschichtungssystem |
| 11 | Basismaterial |
| 12 | Haftvermittlerschicht |
| 13 | Oxidschicht |
| 14 | Wärmedämmschicht (TBC) |
| a, b | Kurve |
| $C$, $C_1$, $C_2$ | Fehlerkonstante |
| $\delta_{ox}$, $\delta_1$, $\delta_2$ | Dicke Oxidschicht |
| R | Krümmungsradius |
| t' | Dicke der Wärmedämmschicht |
| $\sigma_n$ | Normalspannung |
| $\sigma_t$ | Tangentialspannung |

**Patentansprüche**

1. Verfahren zum Abschätzen der Lebensdauer einer Wärmedämmschicht (14), die mittels einer dazwischenliegenden Haftvermittlerschicht (12) auf der Oberfläche eines zyklischen thermischen Belastungen unterworfenen Bauteils, insbesondere einer Leit- und/oder Laufschaufel einer Gasturbine, angebracht ist, **dadurch gekennzeichnet, dass** in einem ersten Schritt die Amplitude der Normalspannung ($\Delta\sigma_n$) senkrecht zur Grenzschicht zwischen Haftvermittlerschicht (12) und Wärmedämmschicht (14) bei zyklischer Belastung bestimmt wird, und dass in einem zweiten Schritt zu jeder Normalspannungsamplitude ($\Delta\sigma_n$) nach Massgabe der Formel

$$N_i = C\left(\frac{\Delta\sigma_n}{\sigma_0}\right)^m$$

die Anzahl $N_i$ der ertragbaren Zyklen berechnet wird, wobei $\sigma_0$ ein Bezugswert der Spannung ist und $C(\delta_{ox})$ und $m(\delta_{ox})$ Materialparameter sind, welche von der Dicke ($\delta_{ox}$) einer zwischen der Wärmedämmschicht (14) und der Haftvermittlerschicht (12) befindlichen und bei zyklischer Belastung dicker werdenden Oxidschicht (13) abhängen.

2. Verfahren nach Anspruch 1, **dadurch gekennzeichnet, dass** die Abhängigkeit der Materialparameter $C(\delta_{ox})$ und $m(\delta_{ox})$ von der Dicke ($\delta_{ox}$) der Oxidschicht (13) als linear angenommen wird.

3. Verfahren nach Anspruch 2, **dadurch gekennzeichnet, dass** für die Zunahme der Dicke ($\delta_{ox}$) der Oxidschicht (13) mit der Zeit t ein Wachstumsgesetz der Form

$$\delta_{ox} = k_p t^n$$

mit einer Wachstumskonstante $k_p$ und einem Exponenten n verwendet wird, dass ein Schädigungsinkrement $\Delta D$ berechnet wird, welches der Näherungsformel

$$\Delta D(N) \approx \frac{1}{C(N)}(\Delta\sigma_n)^{-m(N)}$$

genügt, wobei N die Anzahl der Belastungszyklen angibt, und C(N) und m(N) Parameter sind, welche den Gleichungen

$$C(N) = \alpha_c\,(NT)^n + \beta_c$$

und

$$m(N) = \alpha_m\,(NT)^n + \beta_m$$

genügen, mit dem Exponenten n, den Konstanten $\alpha_c$, $\alpha_m$, $\beta_c$, $\beta_m$, und der Haltezeit T bei hoher Temperatur pro Belastungszyklus, und dass die Zahl der vom Bauteil ertragbaren Belastungszyklen $N_i$ dadurch bestimmt wird, dass die Schädigungsinkremente nach der Formel

$$D = \sum_{N=1}^{N_i} \Delta D(N)$$

aufsummiert werden, bis D den Wert 1 erreicht hat.

4. Verfahren nach Anspruch 3, **dadurch gekennzeichnet, dass** im Wachstumsgesetz ein Exponent n von ungefähr 0,5 verwendet wird.

5. Verfahren nach einem der Ansprüche 1 bis 4, **dadurch gekennzeichnet, dass** die Normalspannungsamplitude

($\Delta\sigma_n$) auf der Oberfläche des Bauteils mittels einer Finite-Elemente-Methode bestimmt wird.

($\Delta\sigma_n$) auf der Oberfläche des Bauteils mittels einer Finite-Elemente-Methode bestimmt wird.

*Fig. 1*

*Fig. 2*

# Fig. 3

# Fig. 4

**Fig. 5**